# EUROPEAN PATENT APPLICATION

(11) **EP 2 728 911 A1**
(43) Date of publication of application: **07.05.2014**
(21) Application number: 12804319.7
(22) Date of filing: 04.06.2012
(51) Int. Cl.: H04W 4/06, H04W 4/22

(54) **COMMUNICATION DEVICE AND COMMUNICATION METHOD**

(30) Priority: 30.06.2011 JP 2011146220
(71) Applicant: NTT DOCOMO, INC., Chiyoda-ku Tokyo 100-6150 (JP)
(72) Inventor: AOYAGI, Kenichiro, Tokyo 100-6150 (JP); ABETA, Sadayuki, Tokyo 100-6150 (JP); WATANABE, Yasuyuki, Tokyo 100-6150 (JP); MATSUTANI, Hideyuki, Tokyo 100-6150 (JP)
(74) Representative: HOFFMANN EITLE
(86) International application number: PCT/JP2012/064400
(87) International publication number: WO 2013/001988

(57) **Abstract**

A communication device includes a network side communication unit that receives emergency information from an information broadcasting node; a UE side communication unit that communicates a communication signal with user equipment through a radio base station; and a determination unit that determines whether to allow state transition, when the UE side communication unit receives a request signal requesting the state transition of an RRC protocol state from the user equipment, subsequent to broadcasting a Primary Notification signal providing notice of broadcasting of the emergency information. When the state transition is from a state in which receiving of the emergency information is enabled to a state in which receiving of the emergency information is disabled, the determination unit determines to disallow the state transition, and broadcasts a Secondary Notification signal including the emergency information.

## Description

### TECHNICAL FIELD

The present invention relates to a communication device and a communication method.

### BACKGROUND ART

In an earthquake early warning distribution infrastructure for mobile radio communication (e.g., CBS, ETWS, and CMAS), by broadcasting information by a simultaneous broadcasting signal, a warning can be quickly made to a broad range of users, without establishing dedicated channels for corresponding users. As the simultaneous broadcasting signal, for example, a paging signal through a Common Control Channel (CCCH); a reporting signal through a Broadcast Control Channel (BCCH); or a signal (e.g., BMC) through a Common Traffic Channel (CTCH) may be considered.

Usually, broadcast information, which is broadcast during an earthquake and tsunami, for example, is transmitted by transmitting a Primary Notification signal and subsequently transmitting a Secondary Notification signal. The Primary Notification signal provides advance notice of broadcasting of emergency information by minimum information, such as "earthquake" or "tsunami." The Secondary Notification signal indicates details (emergency information), such as seismic intensity in each place and an epicenter. In this manner, by dividing information broadcasting into two steps, broadcast information can be quickly and flexibly broadcast. As an example, the Primary Notification information is transmitted through the common control channel (CCCH), and the Secondary Notification information is transmitted through the common traffic channel (CTCH).

For a case of a mobile communication system, such as based on the wideband code division multiple access (WCDMA) scheme, user equipment (UE) which is in an idle (IDLE) mode (in which a connection is not established) or in a paging (Cell_PCH) mode (in which no user data is transmitted nor received) can properly receive the common traffic channel (CTCH). However, user equipment (UE) which transmits and receives user data (which UE is in a cell DCH (Cell_DCH) mode or in a cell FACH (Cell_FACH) mode) performs communication without referring to the common traffic channel (CTCH). Accordingly, a problem is that a user of the user equipment, whose communication mode (RRC protocol state) is the Cell_DCH mode or the Cell_FACH mode, may not quickly notice existence of broadcast information, or even if the user notices it, the user may not properly receive it. Especially, subsequent to transmission of a Primary Notification signal from a radio access device, which Primary Notification signal provides advance notice of broadcasting of emergency information, when the user equipment is triggered, for example, by generation of data and transitions to a mode in which the user equipment can transmit and receive user data, the user equipment becomes incapable of receiving a Secondary Notification signal including the emergency information. In the present invention, the radio access device (Radio Access Network: RAN) is a concept including a base station and a radio network controller. Non-Patent Document 1, for example, discloses that user equipment in a specific RRC protocol state can receive broadcast information.

To address this problem, it can be considered to design user equipment (UE), so that it can receive the common traffic channel (CTCH) even in a state (Cell_DCH) in which a dedicated channel is established, for example. However, if such a function were mandatory for user equipment (UE), the user equipment would be required to always monitor the common traffic channel (CTCH), in addition to transmission and reception of user data. Consequently, the concern would be that the battery energy would be consumed quicker, and that cost of the user equipment (UE) would be increased.

### RELATED ART DOCUMENT

### [NON-PATENT DOCUMENT]

[NON-PATENT DOCUMENT 1] 3GPP TS25.304 V8.11.0(2011-09), 6.2

### SUMMARY OF THE INVENTION

### PROBLEM TO BE SOLVED BY THE INVENTION

An object of the present invention is to maintain and increase likelihood that user equipment is able to receive a Secondary Notification signal including emergency information, after a Primary Notification signal, which provides notice of broadcasting of the emergency information, is transmitted from a radio access device.

### MEANS FOR SOLVING THE PROBLEM

According to an embodiment, a communication device includes a network side communication unit that receives emergency information from an information broadcasting node; a UE side communication unit that communicates a communication signal with user equipment through a radio base station; and a determination unit that determines whether state transition is allowed, when the UE side communication unit receives a request signal requesting the state transition of an RRC protocol state from the user equipment, after the UE side communication unit broadcasts a Primary Notification signal, wherein the Primary Notification signal provides notice of broadcasting of the emergency information. When the state transition indicated by the request signal is the state transition from a state in which receiving of the emergency information is enabled to a state in which receiving of the emergency information is disabled, the determination unit determines to disallow the state transition, and the UE side communication unit broadcasts a Secondary Notification signal including the emergency information.

### EFFECT OF THE PRESENT INVENTION

According to the embodiment, it is possible to maintain and increase likelihood that the user equipment is able to receive the Secondary Notification signal including the emergency information, after the radio access device transmits the Primary Notification signal, which provides the notice of broadcasting of the emergency information.

### BRIEF DESCRIPTION OF THE DRAWINGS

FIG. 1 is a diagram showing an outline of a communication system;
FIG. 2 is a diagram showing an operation example in which a request for transition is disallowed;
FIG. 3 is a diagram showing an operation example in which DL data transmission is postponed;
FIG. 4 is a diagram showing an operation example in which a reporting signal is utilized;
FIG. 5 is a diagram showing an operation example in which user equipment autonomously determines;
FIG. 6 is a functional block diagram of a radio network controller; and
FIG. 7 is a functional block diagram of the user equipment.

### EMBODIMENTS FOR CARRYING OUT THE INVENTION

According to an embodiment which is explained below, a control node at a network side is triggered by transmission of a Primary Notification signal, which provides advance notice of broadcasting of emergency information, and the control node disallows user equipment to transition to a state in which the user equipment is incapable of receiving a Secondary Notification signal, which includes the emergency information. Typically, the control node is a radio network controller, a mobile switching center, or the like. For example, in a third generation mobile communication system, the control node disallows user equipment operating in a cell PCH mode (Cell_PCH) to transition to a cell DCH mode (Cell_DCH). Alternatively, the control node may command the user equipment to switch to a mobile communication system, in which a Secondary Notification signal can be received irrespective of an RRC protocol state, instead of disallowing transition to the cell DCH state (Cell_DCH). For example, the control node may command the user equipment to switch from the third generation mobile communication system to an LTE mobile communication system. By disallowing the state transition from the cell PCH state (Cell_PCH) to the cell DCH state (Cell_DCH), or by prompting switching to a different mobile communication system (which is a different RAT), it is possible to lower likelihood that the user equipment becomes incapable of receiving the Secondary Notification signal.

The embodiment is explained from the following perspectives.
1. Communication system
2. Operation example
   2.1 Operation example in which a request for transition is disallowed
   2.2 Switching of a cell or a RAT
   2.3 Restriction on a request signal
   2.4 Operation example in which a specific information element is included in an RRC connection request
   2.5 Operation example in which DL data transmission is postponed
   2.6 Operation example in which a reporting signal is utilized
   2.7 Autonomous determination by user equipment
3. Radio network controller
4. User equipment

### <Example 1>

### <1. Communication system>

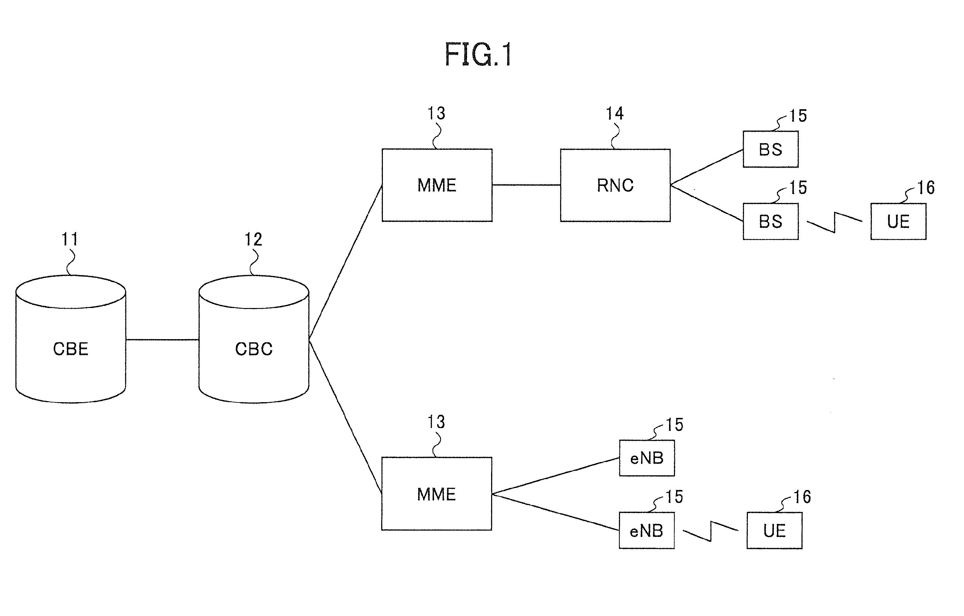

FIG. 1 shows a communication system which can be used in the embodiment. FIG. 1 shows nodes which are particularly related to the embodiment, among various nodes included in the communication system. For convenience of explanation, the communication system is assumed to be a third generation mobile communication system, such as a WCDMA system or a GSM system. However, the present invention may be applied to another communication system (e.g., a second generation mobile communication system). The communication system includes a CBE 11 which is a cell broadcast entity; a CBC 12 which is a cell broadcast center; a MME 13 which is a mobile switching center; an RNC 14 which is a radio network controller; an eNB 15 which is a base station of an LTE system; a BS (or NodeB) 15 which is a base station of the 3G system; and UEs 16 which are units of user equipment.

The cell broadcast entity (CBE) 11 is an information source which provides broadcast information at a time of disaster. Specifically, a local government or a Government (e.g., Meteorological Agency) corresponds to the CBE, for example.

The cell broadcast center (CBC) 12 creates broadcast information, which is actually to be broadcast to user equipment, based on information which is provided from the CBE 11. The CBC 12 may determine a region or an area in which the broadcast information is to be broadcast, based on the information which is provided from the CBE 11. For example, when an earthquake occurs, a region may be specifically identified in which a concern is danger of tsunami.

In general, the mobile switching center MME 13 performs call processing of user equipment. For example, the mobile switching center MME 13 performs management of subscriber information, mobility management, call origination and termination processing, a billing process, and QoS control. The mobile switching center MME 13 according to the embodiment transmits broadcast information to a node (a radio network controller RNC and/or a base station eNB), which is specified by the CBC 12.

In general, the radio network controller RNC 14 performs a process which is related to call processing of user equipment. For example, for user equipment of a third generation mobile communication system, it performs processing of control signals (which are related to Radio Resource Control (RRC)); state management; connection processing; handover processing; and maintenance management of a network. The radio network controller RNC 14 according to the embodiment forwards broadcast information to a base station in an area, which is specified by the CBC 12. The user equipment UE 16 according to the embodiment operates in any one of a plurality of RRC protocol states (communication states). The radio network controller RNC 14 manages an RRC protocol state of the user equipment UE.16. Specifically, the RRC protocol states in the third generation mobile communication system are a cell DCH state (Cell_DCH); a cell FACH state (Cell_FACH); a cell PCH state (Cell_PCH); and an idle state (IDLE). In the cell DCH state (Cell_DCH), dedicated channels are established for uplink and downlink, and user data and control data are communicated in a bidirectional manner. In the cell FACH state (Cell_FACH), no dedicated channels are established. However, user data and control data can be communicated by using a shared channel. In the cell PCH state (Cell_PCH), transmission and reception of user data are disabled, and control signals are discontinuously received. Unlike the other three states, in the idle state (IDLE), the RRC connection is not established. In the cell PCH state (Cell_PCH) and in the idle state (IDLE), user equipment discontinuously receives a paging channel PICH to wait for a call. The RRC connection is established in response to a call from the network, or in a case of originating a call. Here, in the cell DCH state (Cell_DCH) and in the cell FACH state (Cell_FACH), user equipment UE does not monitor a common traffic channel CTCH. However, in the cell PCH state (Cell_PCH) and in the idle state (IDLE), user equipment UE monitors the common traffic channel CTCH. In any one of the states, user equipment can receive a common control channel CCCH. However, in the cell DCH state (Cell_DCH) and in the cell FACH state (Cell_FACH), user equipment UE is incapable of receiving an emergency message which is broadcast through the common traffic channel CTCH. In the cell PCH state (Cell_PCH) and in the idle state (IDLE), user equipment UE can receive such an emergency message. In this point, it is different from the LTE mobile communication system in which user equipment UE can receive emergency broadcast information even if the RRC protocol state is a connected state (Connected) or the idle state (IDLE).

The base station eNB 15 of the LTE system is a base station in an LTE mobile communication system. The base station eNB 15 performs, for example, allocation control of radio resources for performing radio communication with the user equipment UE 16.

The base station BS (or NodeB) 15 of the 3G system is a base station in a third generation mobile communication system.

The user equipment UE 16 may be any suitable communication device that enables a user to perform radio communication in both or one of the LTE mobile communication system and the third generation mobile communication system, and that is capable of receiving broadcast information such as ETWS information. Typically, user equipment is a cellular phone. However, it may be another device. For example, user equipment may be an information terminal; a high capability mobile telephone; a smart phone; a tablet computer; a personal digital assistant; a mobile personal computer; a palmtop computer; a laptop computer, a desktop computer; or the like. The user equipment UE 16 operates in one of the plurality of RRC protocol states (communication states). Specifically, in the third generation mobile communication system, the RRC protocol states are the cell DCH state (Cell_DCH); the cell FACH state (Cell_FACH); the cell PCH state (Cell_PCH); and the idle state (IDLE). In the LTE mobile communication system, the RRC protocol states are the connected state (Connected) and the idle state (IDLE).

In FIG. 1, for simplicity of depicting, only the third generation mobile communication system and the LTE mobile communication system are depicted. However, another communication system may be included. For example, a second generation mobile communication system or an LTE advanced mobile communication system may be included.

### <2. Operation example>

### <<2.1 Operation example in which a request for transition is disallowed>>

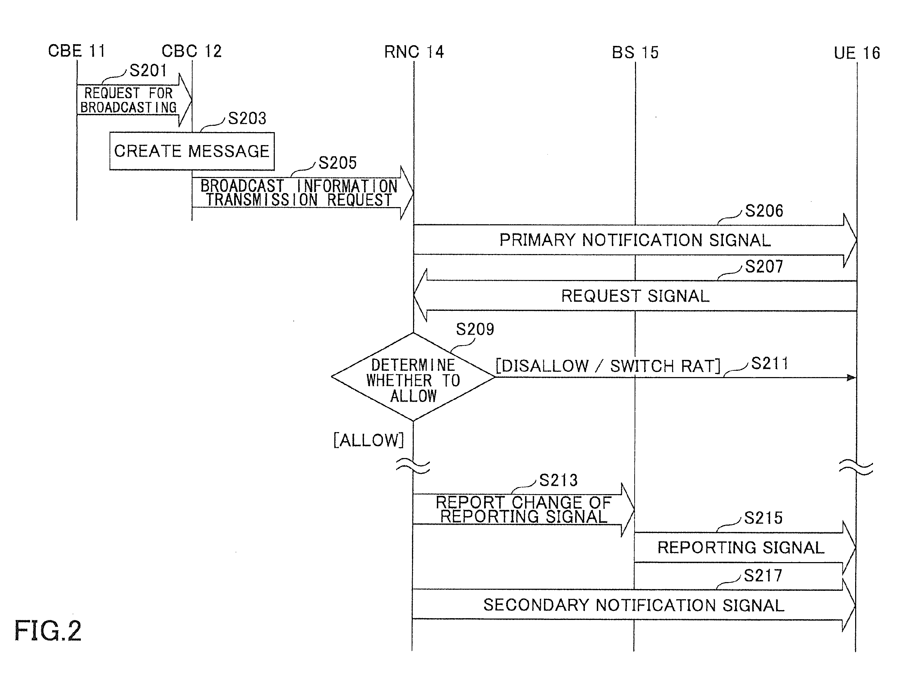

FIG. 2 shows an operation example which is performed in the third generation mobile communication system of the communication system which is shown in FIG. 1.

When a disaster, such as an earthquake, or an emergency occurs, the cell broadcast entity CBE 11, such as a local government or Meteorological Agency, requests the cell broadcast center CBC 12 to transmit broadcast information.

For example, when a disaster (such as an earthquake) occurs, an agency (CBE), such as Meteorological Agency, creates broadcast information, in response to detection of P-wave (Primary Wave), which is a preliminary tremor, and reports it to the cell broadcast center CBC 12.

At step S203, the cell broadcast center CBC 12 creates broadcast information or a message to be reported to user equipment UE, based on the information which is received together with the request. When the broadcast information is to be transmitted to a limited specific area or a region, the cell broadcast center CBC 12 determines a broadcast area to which the broadcast information is transmitted.

At step S205, the cell broadcast center CBC 12 requests the radio network controller 14 to transmit the broadcast information. As an example, broadcast information includes a disaster type; a broadcast area; Primary Notification information; and Secondary Notification information (a body of a message). The disaster type is represented by a message identifier or a serial number of the broadcast information. When a plurality of broadcast information pieces are transmitted at corresponding different timings, the latest one is overwritten over an old one. When the broadcast information is to be transmitted to the limited specific area, the "broadcast area" is information for identifying the specific area. The Primary Notification information includes the minimum information, such as "Earthquake," "Tsunami," "Earthquake + Tsunami," or the like. Other detailed information is included in the Secondary Notification signal or the body of the message as the emergency information. For convenience of explanation, the information received by the radio network controller RNC 14 is referred to as the "broadcast information," and it is assumed that the "emergency information" is included in the Secondary Notification signal, which is to be received by the user equipment UE 16. As long as there is no possibility of confusion, the broadcast information and the emergency information may be used as synonyms.

At step S206, the radio network controller RNC 14 simultaneously transmits the Primary Notification signal including the minimum information piece, such as "Earthquake," "Tsunami," or "Earthquake + Tsunami," to units of user equipment. The Primary Notification signal is reported to the units of user equipment as a paging signal by using the common control channel CCCH. Since the Primary Notification information includes only the minimum information piece of the broadcast information, it can be quickly reported to the units of user equipment.

For convenience of explanation, it is assumed that the user equipment UE 16 operates in the idle state (IDLE) or in the cell PCH state (Cell_PCH). If the state is maintained to be the same, the user equipment UE 16 can properly receive the Secondary Notification signal, which is reported after that.

For convenience of explanation, it is assumed that the radio network controller RNC 14 performs processing after step S205. However, it is not mandatory for the embodiment. The mobile switching center MME 13 or a core node, which is not shown in the figure, may perform the processing after step S205.

At step S207, the user equipment UE 16 transmits a request signal for requesting state transition of the RRC protocol state to the radio network controller RNC 14. The request signal is transmitted, for example, when user data to be transmitted in the uplink is generated in the user equipment UE 16. Alternatively, the request signal may be transmitted, when downlink user data is generated. When the user equipment UE 16 is in the idle state (IDLE), it is necessary to establish an RRC connection to transmit user data. Thus, the request signal is for requesting establishment of an RRC connection as well as state transition from the idle state (IDLE) to the cell DCH state (Cell_DCH) or to the cell FACH state (Cell_FACH). When the user equipment UE 16 is in the cell PCH state (Cell_PCH), since the RRC connection has already been established, the request signal is for requesting state transition from the idle state (IDLE) to the cell DCH state (Cell_DCH) or to the cell FACH state (Cell_FACH). As an example, the user equipment UE 16 is in the idle state (IDLE), and the state transition which is requested by the request signal is the state transition from the idle state (IDLE) to the cell DCH state (Cell_DCH). However, the embodiment is not limited to this state transition, and different transitions may be requested. For example, state transition may be performed, such as state transition from the idle state (IDLE) to the cell FACH state (Cell_FACH), state transition from the cell PCH state (Cell_PCH) to the cell DCH state (Cell_DCH), and state transition from the cell PCH state (Cell_PCH) to the FACH state (Cell_FACH). In either case, it is assumed for the following explanation that state transition is from a state in which transmission and reception of user data are disabled but reception of the Secondary Notification signal is enabled to a state in which transmission and reception of user data are enabled but reception of the Secondary Notification signal is disabled. As described above, when the state transitions from the idle state (IDLE) or from the cell PCH state (Cell_PCH) to the cell DCH state (Cell_DCH) or to cell FACH state (Cell_FACH), transmission and reception of user data are enabled, but reception of the Secondary Notification signal, which is reported through the common traffic channel CTCH, is disabled. From such a perspective, in this operation example, when the Primary Notification signal is simultaneously transmitted at step S206 and subsequently the request signal is transmitted at step S207, the radio network controller RNC 14 determines whether the state transition is allowed or disallowed.

As an example, when the state transition indicated by the request signal is a predetermined one, the radio network controller RNC 14 disallows the state transition at step S209. If it is not, the radio network controller RNC 14 allows the state transition at step S209. The predetermined state transition is state transition from a state in which control signals are discontinuously received (the cell PCH state (Cell_PCH) or the idle state (IDLE)) to a state in which communication of user data is enabled but reception of the emergency information is disabled (the cell DCH state (Cell_DCH) or the cell FACH (Cell_FACH)). In this operation example, when state transition is other than that, the state transition may be allowed. For the case of the current example, since the state transition indicated by the request signal corresponds to the predetermined state transition, the radio network controller RNC 14 individually transmits a control signal indicating that such state transition is disallowed to the user equipment UE 16. Here, apart from this operation example, when state transition other than the predetermined state transition is requested (e.g., when the state transition is from the idle state (IDLE) to the cell PCH state (Cell_PCH)), the radio network controller RNC 14 determines to allow such state transition, and a control signal indicating the contents of the determination is individually transmitted (not shown) to the user equipment UE 16. In this case, the user equipment UE 16 performs the state transition in accordance with the control signal (not shown). In either case, even if, for example, uplink user data is generated, the user equipment UE 16 postpones its transmission.

At step S213, the radio network controller RNC 14 reports a change of reporting information to the base station 15. Reporting of the change of the reporting information may be made by a message, such as "SYSTEM INFORMATION CHANGE INDICATION."

At step S215, the base station 15 transmits the changed reporting information. The changed reporting information is for reporting timing and the like of the Secondary Notification signal to the user equipment, which is transmitted after the Primary Notification signal, which is reported at step S206. The procedures at steps S213 and S215 of reporting the change of the reporting information may be executed at the depicted timings, or may be executed together with step S206 of reporting the paging signal.

At step S217, the radio network controller RNC 14 simultaneously transmits the Secondary Notification signal including the emergency information to the units of user equipment UE 16. The Secondary Notification signal may be reported as a Broadcast Multicast Control-Cell Broadcast Service message (BMC-CBS message) through the common traffic channel CTCH. Unlike the Primary Notification signal including only the minimum information, such as "Earthquake" or "Tsunami," the Secondary Notification signal includes detailed emergency information such as seismic intensity in each place and an epicenter. The user equipment in the DCH state (Cell_DCH) or in the FACH state (Cell_FACH) is incapable of receiving the Secondary Notification signal. However, because of step S211, the user equipment UE 16 does not transition to such a state. Thus, the user equipment UE 16 can receive the Secondary Notification signal at the timing indicated by the reporting information, which is received at step S215. Usually, the Secondary Notification signal is transmitted at every predetermined time interval (i.e., the Secondary Notification signal is transmitted multiple times). The transmission timing and the transmission time intervals of the Secondary Notification signal are indicated by the changed reporting information at step S215. In theory, it is possible for the user equipment UE 16 to receive the Secondary Notification signal by always monitoring the common traffic channel CTCH after step S211, without using such timing information. However, from a perspective of battery saving, it is preferable to receive the Secondary Notification signal at the timing indicated by the changed reporting information (step S215), and to reduce power consumption during other timings.

The uplink user data, whose transmission is postponed, is transmitted from the user equipment UE 16, after receiving the Secondary Notification signal at step S217.

### <<2.2 Switching of cell or RAT>>

In the example shown in FIG. 2, user equipment operating in a state, in which reception of the Secondary Notification signal including the emergency information is enabled, is disallowed to transition to a state, in which reception of the Secondary Notification signal is disabled. The embodiment is not limited to this configuration. For example, instead of disallowing the user equipment UE 16 to transition to a state in which reception of the Secondary Notification signal is disabled, the user equipment UE 16 may be prompted to switch to a cell or a communication system (RAT) in which reception of the Secondary Notification signal is enabled. That is because the Primary Notification signal and the Secondary Notification signal are communicated not only in the third generation mobile communication system, but also in another communication system.

Specifically, at step S207 of FIG. 2, the user equipment UE 16 requests transition of an operating state or switching of a RAT (or switching of a cell) from the radio network controller RNC 14. For example, suppose that the user equipment UE 16 served by the third generation mobile communication system is also capable of operating in a long term evolution (LTE) communication system, and that, at a moment of step S207, the user equipment UE 16 is located in a position where switching to an LTE communication system or an LTE cell is enabled. In an LTE communication system, an RRC protocol state of user equipment is the connected state (Connected) or the idle state (IDLE). In either state, reception of the Primary Notification information and the Secondary Notification information is enabled. Accordingly, at step S211, the radio network controller RNC 14 may command such user equipment UE 16 to switch from the third generation communication system to the LTE communication system, instead of allowing or disallowing the state transition. In such a case, at step S211, the user equipment UE 16 switches to the LTE communication system or the LTE cell and receives the Secondary Notification signal in the switching destination, or the user equipment UE 16 receives both the Primary Notification signal and the Secondary Notification signal in the LTE communication system, which is the switching destination. Transition or switching from the third generation communication system to the LTE communication system may be executed by inter-system handover, or by redirect, in which connection is temporarily released and reconnection is performed.

### «2.3 Restriction on request signal»

In the example shown in FIG. 2, after receiving the Primary Notification signal at step S206, the user equipment UE 16 in the state, in which reception of the Secondary Notification signal is enabled, transmits the request signal for requesting the state transition or the like at step S207. Accordingly, when a great number of the units of user equipment UE 16 are in the state in which reception of the Secondary Notification signal is enabled, or when throughput of the network side is not sufficiently high, a concern is that the radio network controller RNC 14 may be congested due to a great number of request signals.

From such a perspective, it can be considered barring transmission of the request signal by the user equipment UE 16 based on a certain criterion. For example, one or more of propriety of transmitting the request signal; waiting time for start of transmission of the request signal (which is the elapsed time after receiving the Primary Notification signal); and the maximum number of times of transmitting the request signal may be set. Such setting items may be reported as reporting information to the user equipment UE 16 separately from the Primary Notification signal, or may be reported to the user equipment UE 16 together with the Primary Notification signal at step S206. In theory, it is possible to include these setting items in the Primary Notification signal. However, from a perspective of, for example, reducing an information amount of the Primary Notification signal and broadcasting it quickly and broadly, it is preferable to report such setting items separately from the Primary Notification signal.

### «2.4 Operation example in which a specific information element is included in an RRC connection request»

When the radio network controller RNC 14 determines to allow or disallow the state transition at step S209, the radio network controller RNC 14 may disallow the state transition only if an additional condition is satisfied in addition to the state transition indicated by the request signal being the predetermined one. For example, the state transition may be disallowed only if the state transition indicated by the request signal is the predetermined one, and a specific information element included in the request signal indicates that reception of the Second Notification signal is required. Such a specific information element or cause information may be determined depending on a type of communication or capability of user equipment, for example. For example, when the communication of the user equipment is for an emergency call or an important call, or when the user equipment does not include a function to receive the Secondary Notification signal, the specific information element may indicate that reception of the Secondary Notification signal is unnecessary. Further, the additional condition may be determined based on a communication state or a communication signal of the user equipment which transmits the request signal, for example. Here, the additional condition is added in addition to the state transition indicated by the request signal being the predetermined one. For example, when a type of a communication call of a communication signal of the user equipment UE 16 is communication for which a requirement on latency is not strict, the state transition, or switching of the cell or the communication system may be allowed; and when it is not, the transition may be disallowed. As another example, when a communication amount or a data amount is less than a predetermined threshold value, the state transition, or switching of the cell or the communication system may be allowed, and when it is not, the transition may be disallowed. As another example, when a transmission rate of the communication signal of the user equipment UE 16 is less than a predetermined threshold value, the state transition, or switching of the cell or the communication system may be allowed, and when it is not, the transition may be disallowed. As another example, when the communication signal of the user equipment UE 16 is not for important communication, the state transition, or switching of the cell or the communication system may be allowed, and when it is for the important communication, the transition may be disallowed. These propriety determinations of the state transition are for exemplifying purpose only, and a propriety determination may be made from another perspective.

### «2.5 Operation example in which DL data transmission is postponed»

In the example shown in FIG. 2, in response to reception of the request signal from the user equipment UE 16 at step S207, the radio network controller RNC 14 transmits a control signal for disallowing the state transition to the user equipment UE 16 at step S211. However, a trigger for changing the state, in which transmission and reception of the user data are disabled (the idle state (IDLE) or the cell PCH state (Cell_PCH)), is generated not only in the uplink, but also in the downlink.

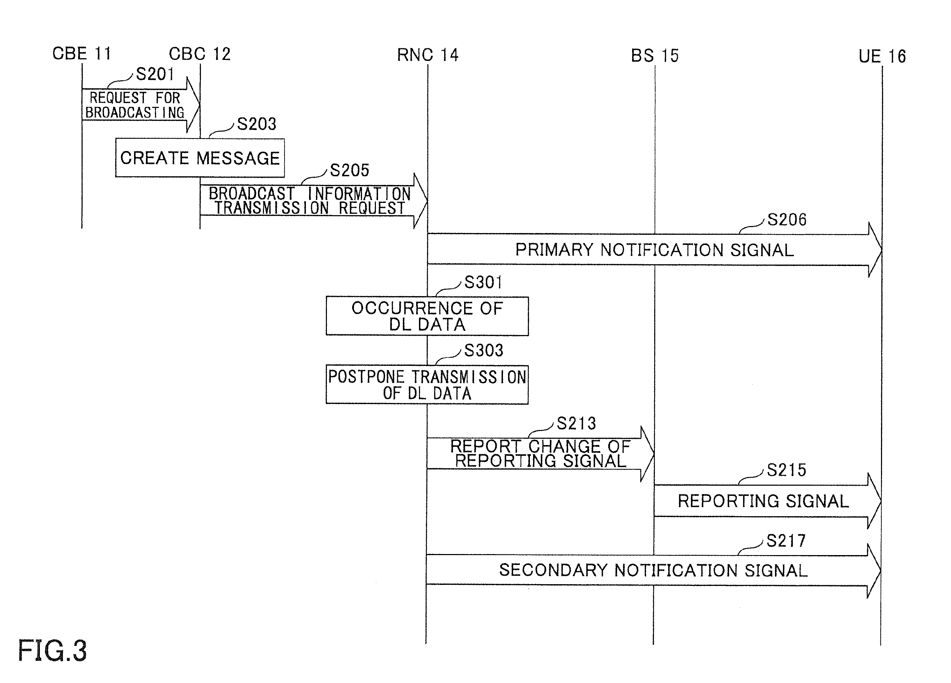

FIG. 3 shows an operation example of a case in which downlink user data is generated for the user equipment UE 16, which is in the idle state (IDLE) or the cell PCH state (Cell_PCH). In general, it is the same as that of shown in FIG. 2. However, it is different mainly in a point that processes at steps S301 and S303 are added.

At step S301, user data to be transmitted in the downlink is generated for the user equipment UE 16 in the idle state (IDLE) or in the cell PCH state (Cell_PCH). Usually, the communication state of the user equipment UE 16 is changed to the communication state in which transmission and reception of user data is enabled (the cell DCH state (Cell_DCH) or the cell FACH state (Cell_FACH)), and transmission and reception of the downlink user data are performed. However, when the communication state of the user equipment UE 16 is changed to the communication state in which transmission and reception of user data are enabled (the cell DCH state (Cell_DCH) or the cell FACH state (Cell_FACH)), the user equipment UE 16 becomes incapable of receiving the Secondary Notification signal. Accordingly, in this operation example, transmission of the downlink user data is postponed at step S303, and such state transition is disallowed. Consequently, at step S217, the user equipment UE 16 can receive the Secondary Notification signal at the timing which is indicated by the reporting information received at step S215. Here, the downlink user data whose transmission is postponed at step S303 is transmitted to the user equipment UE 16, after broadcasting the Second Notification signal at step S217.

### «2.6 Operation example in which a reporting signal is utilized»

In the examples shown in FIGS. 2 and 3, the radio network controller RNC 14 (or the mobile switching center, for example) disallows the state transition of the user equipment UE 16, or commands the user equipment UE 16 to switch the cell or to switch the communication system. However, it is not mandatory in the embodiment. The state transition or the like of the user equipment UE 16 may be disallowed by another method.

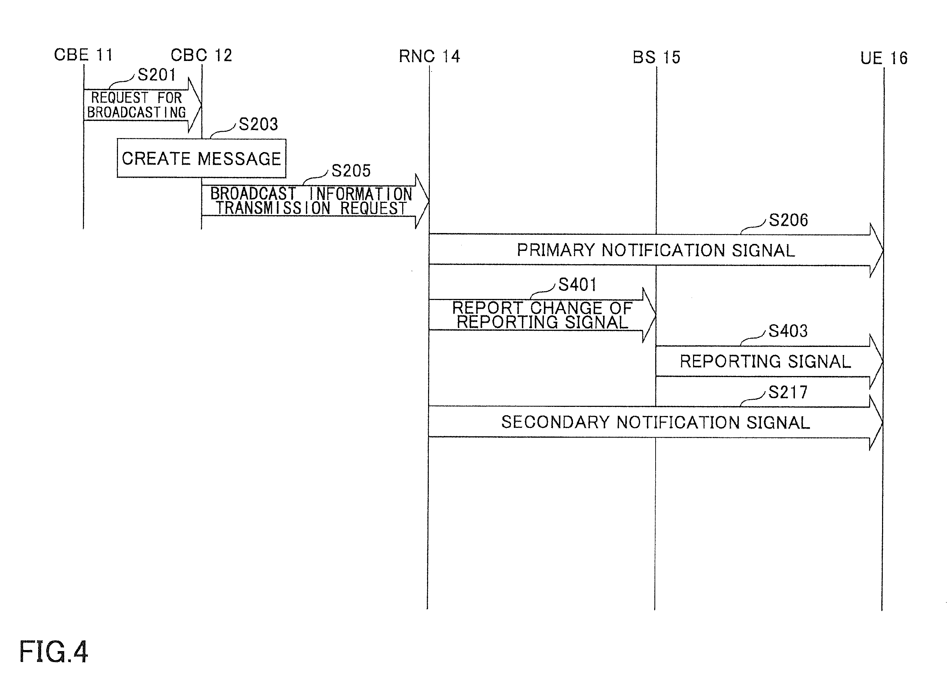

FIG. 4 shows an operation example in which a reporting signal is utilized. In general, it is the same as those of shown in FIGS. 2 and 3. However, it is mainly different in processes at steps S401 and S403. As it is referred to in connection with steps S213 and S215 of FIG. 2, the transmission timing and the transmission time interval of the Secondary Notification signal (which are transmitted as the CBS message through the common traffic channel) are transmitted to the user equipment UE 16 as a reporting signal. In this operation example, the reporting signal, which is transmitted at step S403 after the Primary Notification signal is transmitted through the common control channel CCCH, indicates that predetermined state transition is disallowed, or that subsequent call setting (establishment of an RRC connection) is disallowed. When the user equipment UE 16 receives such a reporting signal, subsequently the user equipment UE 16 does not transmit a request signal for requesting the call setting, even if user data is generated, and the user equipment UE 16 stays in the idle state (IDLE) or the cell PCH state (Cell_PCH). Consequently, at step S217, the user equipment UE 16 can receive the Secondary Notification signal at the timing indicated by the reporting information, which is received at step S215. Here, the communication of the reporting signal at steps S401 and S403 may be performed together with the communication of the reporting information at steps S213 and S215 as shown in FIG. 4, or these can be separately performed, though it is not depicted.

The information signal at steps S401 and S403 may include another information element. For example, the reporting signal may include an information element in which a priority order among cells is defined, for which cells waiting is to be performed, so that the Secondary Notification signal can be received. As described above, in an LTE mobile communication system, user equipment is capable of receiving the Primary Notification signal and the Secondary Notification signal, irrespective of the RRC protocol state. Accordingly, in a third generation mobile communication system, the priority order of the cells indicated by the reporting signal (after simultaneous transmission of the Primary Notification signal) may define a priority level of an LTE mobile communication system to be relatively high. In this case, in accordance with the priority order of the cells, the number of the units of user equipment UE 16 which wait in the LTE mobile communication system becomes relatively large, thereby securing a large number of the units of user equipment which can properly receive the Secondary Notification signal. In an LTE mobile communication system, user equipment can receive the Primary Notification signal and the Secondary Notification signal, irrespective of an RRC protocol state. Accordingly, at the side of the LTE mobile communication system such as shown in FIG. 1, the Secondary Notification signal may be transmitted simultaneously with the transmission of the reporting signal.

### <2.7 Autonomous determination by user equipment>

In the examples shown above, the radio network controller RNC 14 (or the mobile switching center, for example) disallows the state transition of the user equipment UE 16, or reports switching of the cell or switching of the communication system to the user equipment UE 16. However, it is not mandatory in the embodiment, and the user equipment UE 16 may autonomously make a determination.

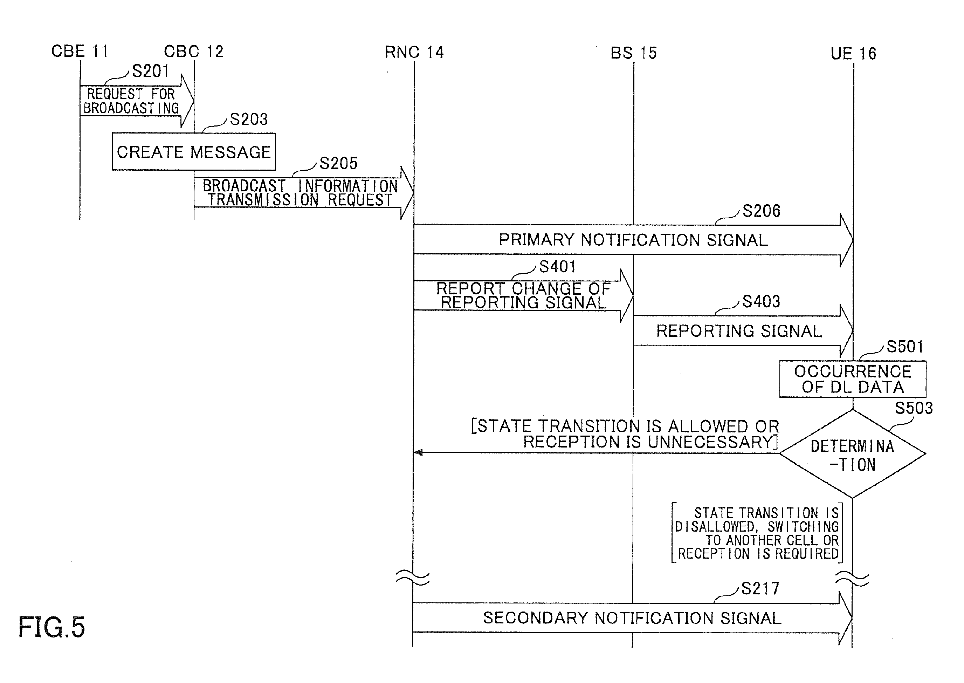

FIG. 5 shows an operation example in such a case. In general, it is the same as the operation example of FIG. 4. However, it is mainly different in a point that steps S501 and S503 are added.

At step S206, the user equipment UE 16 receives the simultaneously transmitted Primary Notification signal.

Suppose that user data to be transmitted in the uplink is generated at step S501.

At step S503, the user equipment determines whether to perform state transition of the RRC protocol state or to switch to another cell. As an example, at step S503, the user equipment UE 16 determines whether state transition to be considered due to generation of the uplink user data at step S501 corresponds to predetermined state transition. As an example, when the state transition to be considered corresponds to the predetermined state transition, a determination may be uniformly made that reception of the Secondary Notification signal is required. The predetermined state transition is state transition from a state in which a control signal is discontinuously received (the cell PCH state (Cell_PCH) or the idle state (IDLE)) to a state in which communication of user data is enabled but reception of emergency information is disabled (the cell DCH state (Cell_DCH) or the cell FACH (Cell_FACH)). In this operation example, for state transition other than these, a determination may be made to execute the state transition. When the state transition is other than the predetermined state transition (e.g., the state transition is from the idle state (IDLE) to the cell PCH state (Cell_PCH)), the user equipment UE 16 executes the state transition (not shown).

Additionally or alternatively to the determination as to whether the state transition to be considered corresponds to the predetermined state transition, at step S503, the user equipment UE 16 may make a determination to switch to another cell, in which reception of the Secondary Notification signal is enabled irrespective of the RRC protocol state. A specific example of the other cell is, for example, a cell of an LTE mobile communication system.

Additionally or alternatively to make a determination as to whether or not to execute the state transition or switching of the cell, at step S503, the user equipment may make a determination as to whether reception of the Secondary Notification signal is required. For example, only for a case in which a type of a communication call of the communication signal of the user equipment UE 16 is communication (in which a requirement on latency is not strict) other than voice communication, the state transition may be disallowed, or switching of the cell or switching of the communication system may be executed. As another example, only for a case in which a communication amount or a data amount of the communication signal of the user equipment UE 16 is less than a predetermined threshold value, a determination may be made to disallow the state transition, or to execute switching of the cell or the communication system. As another example, only for a case in which a transmission rate of the communication signal of the user equipment UE 16 is less than a predetermined threshold value, a determination may be made to disallow the state transition, or to execute switching of the cell or the communication system. As another example, only for a case in which the communication signal of the user equipment UE 16 is not for important communication, a determination may be made to disallow the state transition, or to execute switching of the cell or the communication system. These propriety determinations of the state transition are for exemplifying purpose only, and propriety of the state transition may be determined from another perspective.

### <3. Radio network controller>

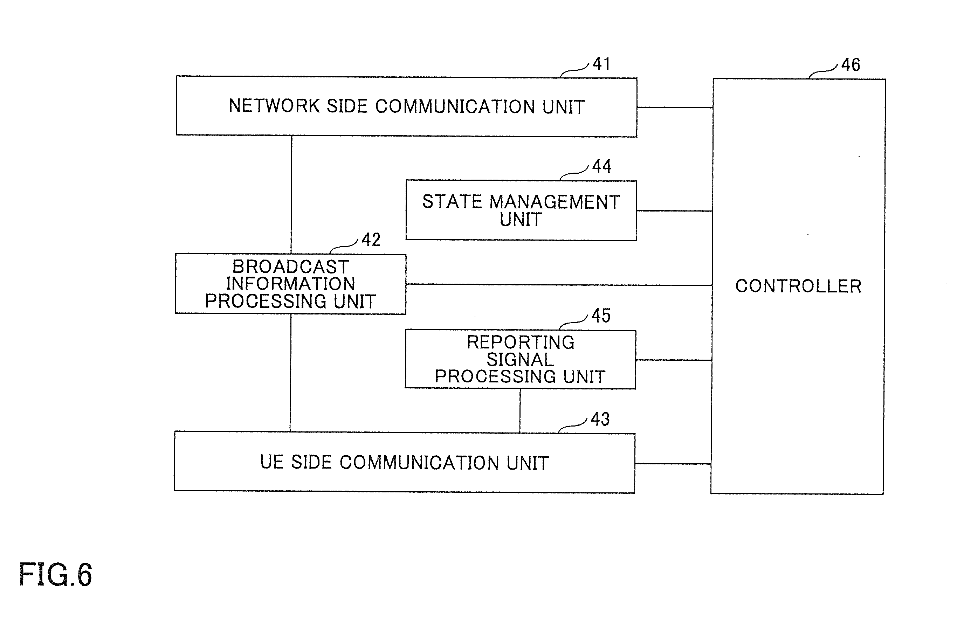

FIG. 6 shows a functional block diagram of the radio network controller RNC such as shown in FIG. 1. However, the similar functions may be included in the mobile switching center MME or a core node other than these. FIG. 6 shows functional units or processing units which are particularly related to the embodiment, among various functional units or processing units included in the communication device. The radio network controller RNC 14 includes, at least, a network side communication unit 41; a broadcast information processing unit 42; a UE side communication unit 43; a state management unit 44; a reporting information processing unit 45; and a controller 46.

The network side communication unit 41 receives broadcast information from an upper layer node, such as the cell broadcast center CBC. The broadcast information may be received together with information specifying an area in which the broadcast information is to be transmitted.

The broadcast information processing unit 42 identifies the broadcast area from the broadcast information received by the network side communication unit 41, and extracts or creates the Primary Notification signal and the Secondary Notification signal.

The UE side communication unit 43 includes a function of transmitting a signal toward user equipment UE, and a function of receiving a signal from user equipment UE. The signal to be transmitted toward user equipment includes the Primary Notification signal, the Secondary Notification signal, a control signal, and user data, for example. The signal to be received from user equipment includes a control signal and user data, for example.

The state management unit 44 manages an RRC protocol state (a communication state) of user equipment UE. Specifically, it manages which one of a predetermined plural number of communication states corresponds to the current communication state of user equipment UE. For example, the predetermined plural number of communication states includes the cell DCH state (Cell_DCH); the cell FACH state (Cell_FACH); the cell PCH state (Cell_PCH); and the idle state (IDLE).

The reporting information processing unit 45 processes (which includes to create, to change, and to edit) reporting information to be transmitted to the user equipment UE. For example, when it is determined that the radio network controller RNC transmits broadcast information, the reporting information processing unit 45 creates reporting information which indicates transmission timing of the Secondary Notification signal, and the reporting information processing unit 45 passes the changed reporting information to the UE side communication unit 43 under control of the controller 46.

The controller 46 controls the functional units of the radio network controller RNC. The controller 46 causes the radio network controller RNC to execute a portion of the operations which is related to the radio network controller RNC, among the operations which are explained by referring to FIGS. 2 - 5.

### <4. User equipment>

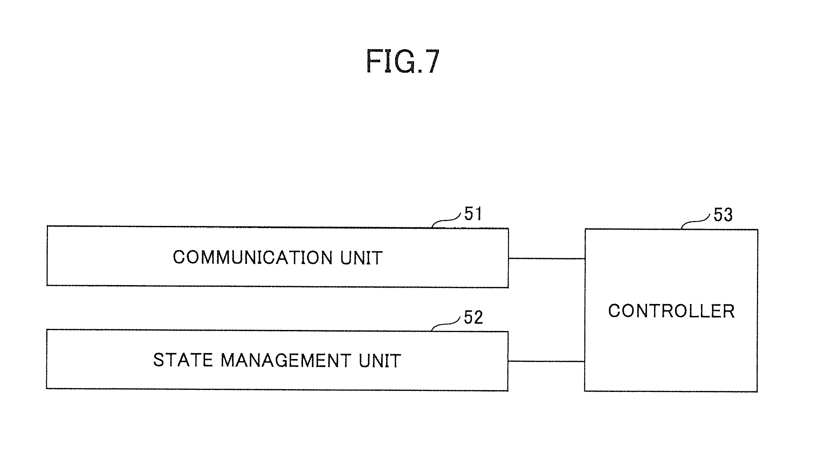

FIG. 7 shows a functional block diagram of the user equipment. FIG. 7 shows functional units or processing units which are particularly related to the embodiment, among various functional units or processing units included in the user equipment. The user equipment includes, at least, a communication unit 51; a state management unit 52; and a controller 53.

The communication unit includes a function of receiving a signal from a radio access device (Radio Access Network: RAN); and a function of transmitting a signal toward the radio access device RAN. The radio access device RAN is a device that includes both the base station BS and the radio network controller RNC. The signal received from the radio access device RAN includes, for example, broadcast information, a control signal, and user data. The signal transmitted toward the radio access device RAN includes, for example, a control signal, and user data.

Similar to the state management unit 44 of FIG. 4, the state management unit 52 manages an RRC protocol state (a communication state) of the user equipment UE. Specifically, it manages which one of plural number of communication states corresponds to the current communication state of the user equipment UE. The plural number of communication states includes, for a case of a third generation mobile communication system, the cell DCH state (Cell_DCH); the cell FACH state (Cell_FACH); the cell PCH state (Cell_PCH); and the idle state (IDLE). For the case of an LTE mobile communication system, it includes the connected state (Connected); and the idle state (IDLE).

The controller 53 controls operation of the user equipment. The controller 53 causes the user equipment to execute a portion of the operations related to the user equipment, among the operations which are explained by referring to FIGS. 2 and 3.

Hereinabove, the present invention is explained by referring to the specific embodiment. However, the embodiment is merely illustrative, and variations, modifications, alterations and substitutions could be conceived by those skilled in the art. For example, the present invention may be applied to any suitable mobile communication system that transmits emergency information. In the above explanation, the broadcast information to be simultaneously transmitted is related to a natural disaster. However, it is not limited to the natural disaster, and it may be something in an artificial situation such as an international dispute. Specific examples of numerical values are used in order to facilitate understanding of the invention. However, these numerical values are simply illustrative, and any other appropriate values may be used, except as indicated otherwise. The separations of the embodiment or the items are not essential to the present invention. Subject matter described in two or more items may be combined and used, and subject matter described in an item may be applied to subject matter described in another item (provided that they do not contradict). For the convenience of explanation, the devices according to the embodiment of the present invention are explained by using functional block diagrams. However, these devices may be implemented in hardware, software, or combinations thereof. The software may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like. Hereinabove, the communication device and the communication method are explained by the embodiment. However, the present invention is not limited to the above-described embodiment, and various modifications and improvements may be made within the scope of the present invention.

The present application is based on and claims the benefit of priority of Japanese Patent Application No. 2011-146220, filed on June 30, 2011, the entire contents of the Japanese application are hereby incorporated by reference.

### LIST OF REFERENCE SYMBOLS

11: Cell broadcast entity CBE
12: Cell broadcast center CBC
13: Mobile switching center MME
14: Radio network controller RNC
15: Base station of LTE system eBN, Base station of 3G system BS
16: User equipment
41: Network side communication unit
42: Broadcast information processing unit
43: UE side communication unit
44: State management unit
45: Reporting information processing unit 45
46: Controller
51: Communication unit
52: State management unit
53: Controller

## Claims

1. A communication device comprising:
a network side communication unit that receives emergency information from an information broadcasting node;
a UE side communication unit that communicates a communication signal with user equipment through a radio base station; and
a determination unit that determines whether state transition is allowed, when the UE side communication unit receives a request signal requesting the state transition of an RRC protocol state from the user equipment, after the UE side communication unit broadcasts a Primary Notification signal, the Primary Notification signal providing notice of broadcasting of the emergency information,
wherein, when the state transition indicated by the request signal is the state transition from a state in which receiving of the emergency information is enabled to a state in which receiving of the emergency information is disabled, the determination unit determines to disallow the state transition, and the UE side communication unit broadcasts a Secondary Notification signal including the emergency information.

2. The communication device according to claim 1,
wherein, when the state transition indicated by the request signal is the state transition from the state in which receiving of the emergency information is enabled to the state in which receiving of the emergency information is disabled, and when a specific information element included in the request signal indicates that receiving of the Secondary Notification signal is required, the determination unit determines to disallow the state transition.

3. The communication device according to claim 2,
wherein, when a communication of the user equipment is not an emergency call nor an important call, and when the user equipment includes a function of receiving the Secondary Notification signal, the specific information element indicates that receiving of the Secondary Notification signal is required.

4. The communication device according to claim 1,
wherein the determination unit determines whether to allow the state transition, based on at least one of a type of call; a communication amount; a transmission rate; and priority of a communication performed by the user equipment, wherein the user equipment transmits the request signal.

5. The communication device according to claim 1,
wherein a reporting signal indicates at least one of propriety of transmission of the request signal; a waiting time period of the transmission of the request signal; and a number of times of retransmission of the request signal, and
wherein the reporting signal is transmitted from the UE side communication unit.

6. A communication device comprising:
a network side communication unit that receives emergency information from an information broadcasting node; and
a UE side communication unit that communicates a communication signal with user equipment through a radio base station,
wherein, when the UE side communication unit broadcasts a Primary Notification signal, the Primary Notification signal providing notice of broadcasting of the emergency information, the UE side communication unit broadcasts a Secondary Notification signal including the emergency information, subsequent to broadcasting a reporting signal indicating that subsequent call setting is to be barred, or together with broadcasting the reporting signal.

7. A communication device comprising:
a network side communication unit that receives emergency information from an information broadcasting node; and
a UE side communication unit that communicates a communication signal with user equipment through a radio base station,
wherein, when the UE side communication unit broadcasts a Primary Notification signal, the Primary Notification signal providing notice of broadcasting of the emergency information, the UE side communication unit transmits reporting information or a dedicated control signal, wherein the reporting information or the dedicated control signal indicates a cell, in which the user equipment is capable of receiving the Secondary Notification signal irrespective of an RRC protocol state of the user equipment, with a high priority level relative to those of other cells, as the cell in which waiting is to be performed.

8. A communication method comprising steps of:
receiving emergency information from an information broadcasting node;
subsequent to broadcasting a Primary Notification signal providing notice of broadcasting of the emergency information, receiving a request signal requesting state transition of an RRC protocol state from user equipment;
determining to disallow the state transition when the state transition indicated by the request signal is the state transition from a state in which receiving of the emergency information is enabled to a state in which receiving of the emergency information is disabled; and
broadcasting, by a UE side communication unit, a Secondary Notification signal including the emergency information.

9. A communication device comprising:
a communication unit that communicates a communication signal with a radio access device; and
a determination unit that determines not to execute state transition of an RRC protocol state, or to execute switching to another cell, when the communication unit receives a broadcast Primary Notification signal providing notice of broadcasting of emergency information,
wherein the state transition of the RRC protocol state is the transition from a state in which receiving of the emergency information is enabled to a state in which receiving of the emergency information is disabled,
wherein the other cell is the cell in which the user equipment is capable of receiving a Secondary Notification signal irrespective of the RRC protocol state of the user equipment, and
wherein the communication unit receives the broadcast Secondary Notification signal including the emergency information subsequent to the determination by the determination unit.

10. A communication method comprising steps of:
receiving a broadcast Primary Notification signal providing notice of broadcasting of emergency information from a radio access device;
determining not to execute state transition of an RRC protocol state, or to execute switching to another cell; and
receiving a broadcast Secondary Notification signal including the emergency information, subsequent to the determination,
wherein the state transition of the RRC protocol state is the transition from a state in which receiving of the emergency information is enabled to a state in which receiving of the emergency information is disabled, and
wherein the other cell is the cell in which the user equipment is capable of receiving the Secondary Notification signal irrespective of the RRC protocol state of the user equipment.
